(19) Europäisches Patentamt
European Patent Office
Office européen des brevets

(11) Publication number: **0 410 514 A1**

# (12) EUROPEAN PATENT APPLICATION

(21) Application number: **90201953.8**

(22) Date of filing: **19.07.90**

(51) Int. Cl.$^5$: **C08L 77/00**, C08L 79/08, C08K 5/20, C08K 5/34

(30) Priority: **28.07.89 NL 8901959**

(43) Date of publication of application: **30.01.91 Bulletin 91/05**

(84) Designated Contracting States: **BE CH DE ES FR GB IT LI LU NL**

(71) Applicant: **AKZO N.V.**
**Velperweg 76**
**NL-6824 BM Arnhem(NL)**

(72) Inventor: **Stigter, Leonie Arina**
**Groningensingel 1149**
**NL-6835 HX Arnhem(NL)**

(74) Representative: **Schalkwijk, Pieter Cornelis et al**
**R. Sieders c.s. P.O. Box 9300**
**NL-6800 SB Arnhem(NL)**

## (54) Polyetherimide-polyamide blend.

(57) A resin composition comprising (1) 5 to 95% by weight of a polyetherimide (PEI) and 95 to 5% by weight of a polyamide (PA), (2) 0,01 to 40 parts by weight of (A) a compound having in the molecule both an ethylenically unsaturated carbon-carbon double bond and a carboxylic acid, acid anhydride, acid amide, imido, carboxylic acid ester, amino or hydroxyl group or (B) an epoxy compound per 100 parts by weight of the total amount of polyetherimide and polyamide resin (1), and (3) 0 to 40 parts by weight of rubbery polymer per 100 parts by weight of the total amount of polyetherimide and polyamide resin (1).

The Izod 180-4A impact resistance of these blends is considerably improved as compared with the known blends that do not contain any of the above functionalizing compounds.

EP 0 410 514 A1

## POLYETHERIMIDE-POLYAMIDE BLEND

Plastics compositions based on a polyetherimide (PEI) and a polyamide (PA) have earlier been proposed in WO-A-84/03894 and US-A-4 657987.

The former patent specification discloses PEI-PA blends composed of 40-80% by weight of a polyetherimide and 60-20% by weight of one or more polyamides. These blends are said to have a relatively greater tensile strength than blends outside this range. The latter patent specification describes PEI-PA blends containing only 5-39% by weight of PEI. It is said to have been found that these blends have more favourable shrinkage and water absorption properties than polyamides into which no PEI has been incorporated. Although some of the blends disclosed in the aforementioned patent specifications have attractive properties, their applicability is limited on account of their too great brittleness.

The invention now provides significantly less brittle PEI-PA blends. The invention consists in that a plastics composition of the type mentioned in the opening paragraph is provided based on the following:

1. 5-95 wt.% of a polyetherimide (PEI) and 95-5 wt.% of a polyamide (PA),
2. 0,01-40 parts by weight of (A) a compound having an ethylenically unsaturated group and/or a propylene group and a carboxylic acid, acid anhydride, acid amide, imido, carboxylic ester, amino or hydroxyl group, or of (B) an epoxy compound per 100 parts by weight of PEI and PA, and
3. 0-40 parts by weight of a rubber polymer per 100 parts by weight of PEI and PA.

It should be noted that blends of a polyetherimide and a small amount of an EPDM terpolymer are known in themselves from WO-A-84/03893 as a means of reducing the notch sensitivity of PEI polymers.

However, such a reduction in notch sensitivity is attended with an increase in brittleness, which is shown by a lower impact strength and a reduced elongation at rupture.

Consequently, the fact that the incorporation of constituent (2) in the presence or not of constituent (3) should result in the brittleness being reduced significantly, must be considered highly surprising.

According to the invention preference is given to plastics compositions based on 5-80 wt.% of PEI and 95-20 wt.% of PA for consituent (1). In general optimum results are obtained.when the PEI:PA weight ratio is 20-60 wt.% of the former to 80-40 wt.% of the latter.

Although a considerable reduction in brittleness can be achieved using an amount of 0,01-40 parts by weight of constituent (2), it has been found that, in general, preference should be given to the incorporation of 0,1 to 20 parts by weight of constituent (2). Optimum results in this case have been obtained with the incorporation of 0,3-15 parts by weight of constituent (2).

Compound (2) having an ethylenically unsaturated group preferably is maleic anhydride, maleic acid, fumaric acid, maleimide, maleic hydrazide, nadic methyl anhydride, dichloromaleic anhydride, maleic acid diamide, a natural fat or oil, an unsaturated carboxylic ester, an acid amide or anhydride of an unsaturated carboxylic acid, an unsaturated alcohol, an unsaturated amine, a reaction product of a diamine and maleic anhydride, maleic acid, fumaric acid, maleimide or maleic hydrazide, an adduct of a diene polymer or an ethylene-propylene copolymer to maleic anhydride or to a diene polymer or ethylene-propylene copolymer substituted with an amino, carboxyl, acid anhydride or hydroxyl group.

Favourable results can be obtained using plastics compositions in which component (2) corresponds to any one of the following formulae:

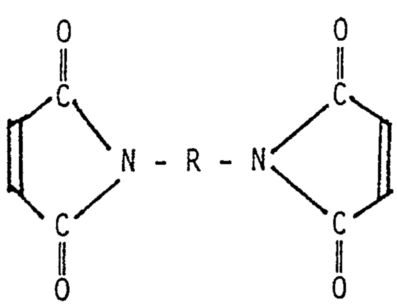 . or 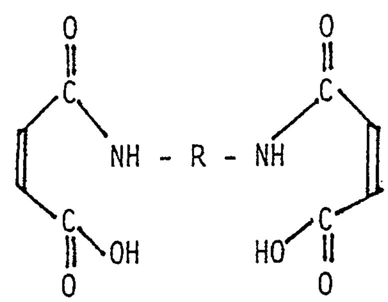

wherein R has the meaning of an alkylene or arylene group having at most 20 carbon atoms, or a

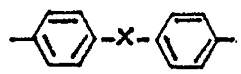

group, wherein X stands for -O-, $-SO_2-$;$CH_2$- or

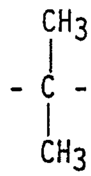

Suitable epoxy compounds that may be employed according to the invention are epoxy resins produced by condensing polyhydric phenols and epichlorohydrin and by condensing polyhydric alcohols and epichlorohydrin, glycidyl-etherified products of monohydric phenols or monohydric alcohols, glycidyl derivatives of amino compounds and epoxidized products of higher olefins or cycloalkenes.

Although using constituent (2) significantly reduces the brittleness of the present PEI-PA blends, in actual practice there is great need for blends of which the notch sensitivity also has been reduced further and which have an improved impact strength as a result of the incorporation of rubberlike polymers (constituent (3)). Such polymers can be either natural in origin or else synthetic materials showing elasticity at room temperature.

Examples of rubberlike polymers include natural rubber, butadiene polymers, butadiene-styrene copolymers (including random copolymers, block copolymers, and graft copolymers), polyisoprene, polychlorobutadiene, butadiene-acrylonitrile copolymers, polyisobutylene, isobutylene-butadiene copolymers, polyacrylic esters, ethylene-propylene copolymers, ethylene-propylene-diene copolymers, thiokol rubber, polysulphide rubber, polyurethane rubber, polyether (e.g. polypropylene oxide), epichlorohydrin rubber, and silicone rubber.

Such polymers are prepared in a known manner, for instance by emulsion polymerisation, solution polymerisation in the presence of known catalysts, such as peroxides, trialkyl aluminium, lithium halides, and nickel catalysts. These rubberlike materials may be employed irrespective of their degree of crosslinking, cis-structure content, trans structure or mean particle size. In preparing these rubberlike materials use may further be made of yet other monomers, such as olefins, dienes, aromatic vinyl compounds, acrylic acid, acrylic and methacrylic esters. They can be incorporated into the rubberlike materials by, e.g., copolymerisation, block copolymerisation or graft copolymerisation.

Examples of monomers that may be used in preparing the rubberlike materials include: ethylene, propylene, styrene, chlorostyrene, $\alpha$-methyl styrene, butadiene, isoprene, chlorobutadiene, butylene, isobutylene, methyl acrylate, maleic anhydride, acrylic acid, ethyl acrylate, butyl acrylate, methyl methacrylate and acrylonitrile.

It has been found that very favourable results can be obtained when the rubberlike polymer is an EPDM, EPR, S(E)BS or polybutadiene rubber.

Preferably, the amount of constituent (3) to be incorporated is not more than 40 parts by weight per 100 parts by weight of polyetherimide and polyamide. Employing a larger amount of rubber polymer will have a detrimental effect on the physical properties of the PEI-PA blends.

Poly(etherimide) polymers that can be used according to the invention have been disclosed int. al. in US Patent Nos. 3 847 867, 3 838 097, and 4 107 147 and can be represented by one of the following structural formulae:

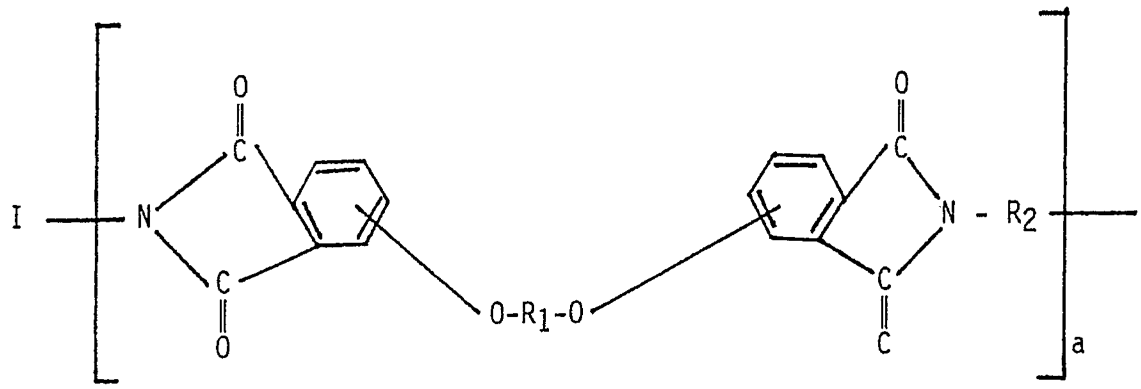

wherein a is an integer greater than 1, preferably from 10-10 000 or higher, the -O-$R_1$-O group is attached to the 3 or 4 and 3′ or 4′ positions, and $R_1$ stands for (a) a substituted or unsubstituted aromatic group of the formula:

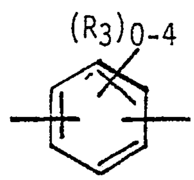

, or

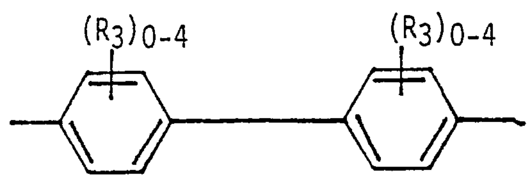

, or

(b) a divalent group that corresponds to the formula:

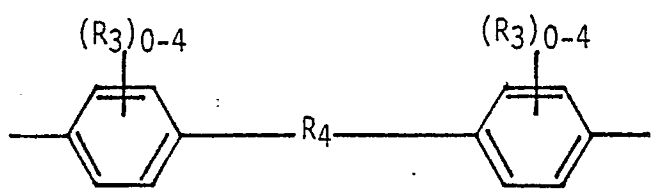

wherein $R_3$ is independently a $C_1$-$C_6$ alkyl group or a halogen atom and $R_4$ has the meaning of -O-, -S-,

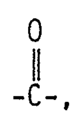

-SO-, -$SO_2$-, an alkylene group having 1-6 carbon atoms, a cycloalkylene group having 4-8 carbon atoms, an alkylidene group having 1-6 carbon atoms, or a cycloalkylidene group having 4-8 carbon atoms, $R_2$ is an aromatic hydrocarbon group having 6-20 carbon atoms or halogenated derivatives thereof or alkyl substituted derivatives thereof, with the alkyl group containing 1-6 carbon atoms, alkylene or cycloalkylene groups having 2-20 carbon atoms, $C_2$-$C_8$ alkylene terminated polydiorganosiloxane or a divalent group of the formula:

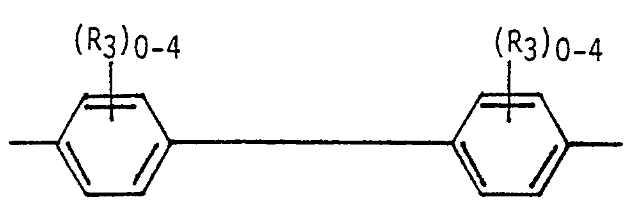

wherein $R_3$ is as previously defined.

II 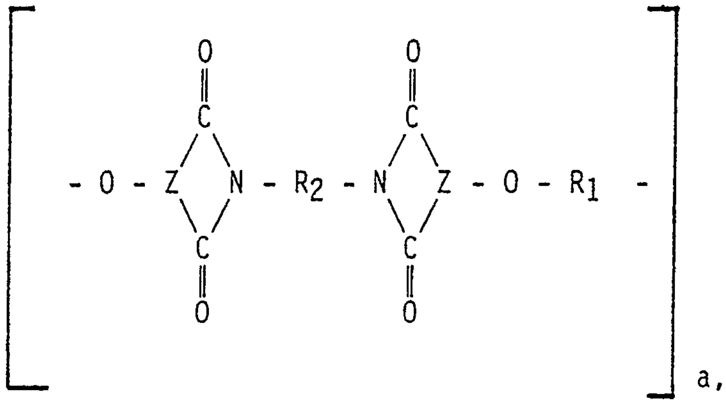

wherein - O - Z may have the following meaning:

(a) 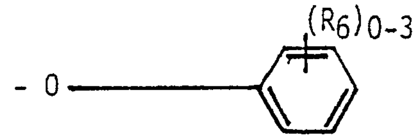

wherein $R_6$ is independently hydrogen or a lower alkyl or alkoxy group,

(b) 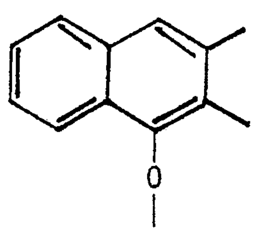

or (c) 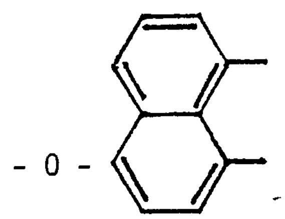

wherein $R_1$ and $R_2$ and a are as previously defined.

These polyetherimides are prepared by methods generally known in the art and disclosed in, int. al., US Patent Nos. 3 833 544, 3 887 588, 4 017 511, 3 965 125, and 4 024 110. The polyetherimides of Formula I can, for example, be obtained by converting an aromatic bis(ether anhydride) of the formula:

III 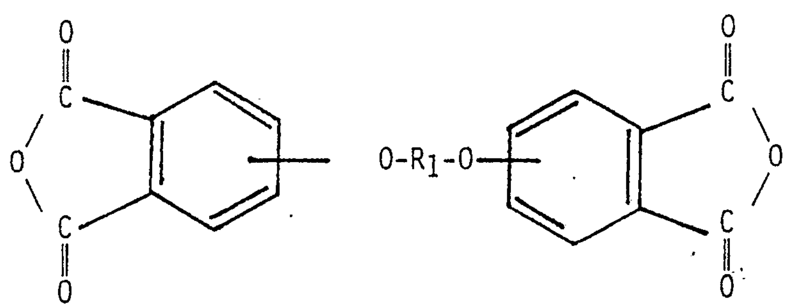

wherein $R_1$ is as defined hereinbefore, with a diamine of the formula

IV $H_2N - R_2 - NH_2$,

wherein $R_2$ is as previously defined.

The reaction is preferably carried out in a solvent, such as o-dichlorobenzene, m-cresol/toluene, N,N-dimethylacetamide, at a temperature in the range of 20°-250°C. Optionally, the conversion may be carried out in the melt at a temperature in the range of 200°-400°C, preferably in the range of 230°-300°C. Optionally, use may be made of chain stoppers to affect the length of the polymer chain. Both the reaction conditions and the proportions of the constituents can be varied widely depending on the desired molecular weight, intrinsic weight, and solvent resistance. When preparing high-molecular weight polyetherimides use will generally be made of equimolar amounts of diamine and dianhydride. However, in certain instances it is preferred to employ a slight molar excess (1-5 mole %) of diamine or dianhydride. The polyetherimides of Formula 1 have an intrinsic viscosity [$\eta'$] greater than 0,2 dl/g, preferably of 0,35 to 0,60 or 0,7 dl/g or even higher when measured in m-cresol at 25°C.

Examples of suitable bis(ether anhydrides) of Formula III include:
2,2-bis[4-(2,3-dicarboxyphenoxy)phenyl]propanedianhydride;
4,4-bis(2,3-dicarboxyphenoxy)diphenylether dianhydride;
1,3-bis(2,3-dicarboxyphenoxy)benzene dianhydride;
4,4'-bis(2,3-dicarboxyphenoxy)benzophenone dianhydride;
2,2-bis[4-(3,4-dicarboxyphenoxy)phenyl]propane dianhydride;
4,4'-bis(3,4-dicarboxyphenoxy)diphenylether dianhydride;
4,4'-bis(3,4-dicarboxyphenoxy)diphenylsulfide dianhydride;
1,3-bis(3,4-dicarboxyphenoxy)benzene dianhydride;
1,4-bis(3,4-dicarboxyphenoxy)benzene dianhydride;
4,4'-bis(3,4dicarboxyphenoxy)benzophenone dianhydride;
4(2,3-dicarboxyphenoxy)-4'-(3,4-dicarboxyphenoxy)diphenyl-2,2-propane dianhydride;
and mixtures thereof.

As examples of organic diamines of Formula IV may be mentioned:
m-phenylene diamine, p-phenylene diamine, 4,4'-diaminodiphenyl propane, 4,4'-diaminodiphenyl methane, benzidine, 4,4'-diaminodiphenyl sulfide, 4,4'-diaminodiphenyl ether, 3,3'-dimethyl benzidine, and 3,3'-dimethoxybenzidine.

The polyetherimides of Formula II may be prepared in the presence of a dipolar aprotic solvent of a mixture of reaction constituents such as (1), a bis(nitrophthalimide) of the formula:

V

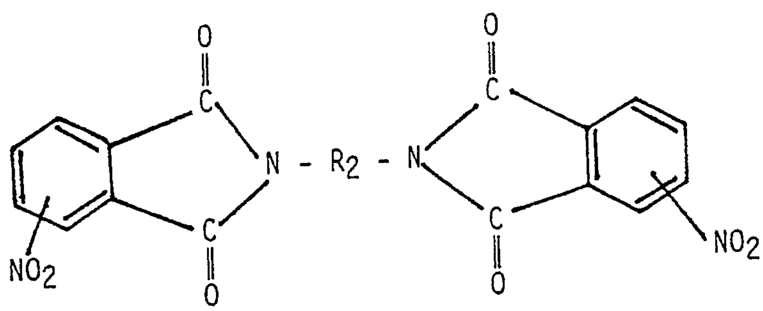

wherein $R_2$ is as defined hereinabove and (2) an alkali metal salt of an organic compound of the formula:

VI $MO - R_1 - OM$,

wherein M has the meaning of an alkali metal and $R_1$ is as previously defined.

The bis(nitrophthalimide) used in preparing the polymer is formed by reacting a diamine of the formula $NH_2$-$R_2$-$NH_2$ described above with a nitro-substituted aromatic anhydride of the formula:

VII

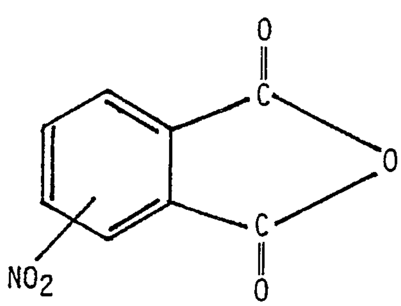

The molar ratio of diamine to anhydride should be about 1:2. The initial conversion product is bis(amide acid) which is subsequently dehydrated to the corresponding bis(nitrophthalimide). Examples of diamines that can be used in such a conversion have been mentioned hereinbefore.

The preferred nitrophthalic anhydrides are 3-nitrophthalic anhydride, 4-nitrophthalic anhydride, and mixtures thereof.

Examples of divalent carbocyclic aromatic groups for $R_1$ include phenylene, biphenylene, naphthylene, etc. Alternatively, $R_1$ can be derived from dihydroxy compounds, such as hydroquinone, resorcinol, chlorohydroquinone, etc. In addition, $R_1$ may be derived from a dihydroxydiarylene compound in which the diary groups are joined by an aliphatic group, a sulphoxide group, a sulphonyl group, a carbonyl group, sulphur or oxygen. As examples of such diarylene compounds may be mentioned:

2,4-dihydroxydiphenyl methane;
bis(2-hydroxyphenyl)methane;
2,2-bis(4-hydroxyphenyl)propane;
bis(4-hydroxyphenyl)methane;
bis(4-hydroxy-5-nitrophenyl)methane;
bis(4-hydroxy-2,6-dimethyl-3-methoxyphenyl)methane;
1,1-bis(4-hydroxyphenyl)ethane;
1,2-bis(4-hydroxyphenyl)ethane;
1,1 bis(2,5-dimethyl-4-hydroxyphenyl)propane;
1,3-bis(3-methyl-4-hydroxyphenyl)propane;
2,2-bis(3-phenyl-4-hydroxyphenyl)propane;
2,2-bis(3-isopropyl-4-hydroxyphenyl)propane;
hydroquinone;
bis(4-hydroxyphenyl)ether, and
bis(4-hydroxyphenyl)sulphone.

When the dialkali metal salts of Formula VI are converted with the compound of Formula V, the constituents are advantageously present in equimolar amounts for optimum properties. Satisfactory results can still be obtained using a slight molar excess of 0,001-0,1 mole of either of the constituents. The conditions of reaction can be varied widely. Generally, the conversion is carried out at a temperature in the range of 25°-150°C. Depending on the other conditions of reaction and/or constituents the pressure employed may be atmospheric, subatmospheric or superatmospheric.

The period of time during which the conversion takes place may range from 5 minutes to 30-40 hours depending on the desired molecular weight and yield.

On conclusion of the reaction the reaction product can be treated in the appropriate manner to obtain the desired polymer through precipitation or some other method of separation. Generally, solvents such as alcohols (e.g. methanol, ethanol, isopropanol) or aliphatic hydrocarbons (e.g. pentane, hexane, octane, cyclohexane) are employed as precipitants. It is important that the reaction between the dinitro-substituted organic compound of Formula V and the alkali metal salt of Formula VI be carried out under anhydrous conditions in the presence of a dipolar aprotic solvent such as dimethyl sulphoxide. The amount of solvent, dipolar aprotic solvent or a mixture thereof with an aromatic solvent usually is such as to give an amount of polymer in it of 10-20%.

Preference is given to polyetherimides having repeating units of the following formula:

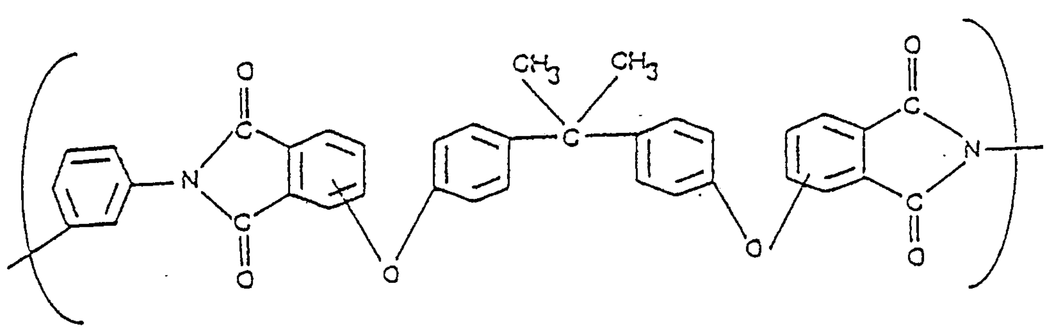

The polyamides that can be used according to the invention include homopolymers as well as copolymers. As a rule, they are formed by the polycondensation of bifunctional monomers, e.g. by the condensation of diamines and dicarboxylic acids and by the polymerization of lactams such as ε-caprolactam. Examples of suitable dioic acids include: carboxylic acid, oxalic acid, glutaric acid, adipic acid, pimelic acid, suberic acid, azelaic acid, sebacic acid, dodecanedicarboxylic acid, and the like. Examples of suitable diamines include: hydrazine, ethylene diamine, hexamethylene diamine, 1,8-octane diamine, piperazine, and the like. Alternatively, aminocarboxylic acids may be used to prepare polyamides that can be employed according to the invention. According to the invention in addition to aliphatic polyamides aromatic polyamides may be employed in the preparation of which use was made of aromatic diamines and dioic acids. As examples of suitable dioic acids may be mentioned: terephthalic acid, isophthalic acid, phthalic acid, and the like. Suitable aromatic diamines include o-phenylene diamine, 2,4-diaminotoluene, and 4,4′-methylene dianiline.

The polyamides can be prepared in a known manner, for instance by direct amidation, low temperature polycondensation of diamines and diacid chlorides, ring-opening polymerization of lactams, addition of amines to activated double bonds, polymerisation of isocyanates, and reation of formaldehyde with dinitriles.

As suitable polyamides may be mentioned: polyhexamethylene adipamide (polyamide-6,6), poly($\epsilon$-caprolactam)(polyamide-6) polypropiolactam (polyamide-3), polypyrrolidone (polyamide-4), poly($\omega$-enanthamide) (polyamide-7), polycaprylactam (polyamide-8), poly($\omega$-undecaneamide) (polyamide-11), and polyhexamethylene terephthalamide (polyamide-6,T) and polytetramethylene adipamide (polyamide-4,6).

Further, the plastics compositions according to the invention may contain reinforcing fibres and fillers. Examples of reinforcing fibres include those of glass, carbon, and aromatic polyamide. As suitable fillers may be mentioned talcum, calcium carbonate, wollastonite, and silicates. Other synthetic materials also may be blended into the plastics compositions according to the invention, such as polyesters, polycarbonates, polyester carbonates, polyphenylene oxide, polyphenylene sulfide, and polyarylates. In addition, polyfluorocarbon compounds such as PTFE may be incorporated into the present compositions, as well as pigments, stabilizers, and plasticizers. The present plastics compositions are prepared in analogous manner to that for PEI-PA blends disclosed in the aforementioned patent specifications, without there being special limits on time and temperature. Proper conditions are dependent on the composition of the material. The mixing temperature generally is in the range of 150°-350° C. In order to prevent decomposition the aim as a rule is for the shortest possible residence time. Mixing may be either continuous or discontinuous and be carried out in an extruder, a Banbury mixer, rollers, and kneaders. Preference is given to a two-step process here, with the first step comprising the PEI being extruded with constituent (2), whereupon, in a second step, the extrudate is extruded with the PA and any constituent (3), fibres, fillers, and other additives that may be present.

Preference in this case is given to the whole mixing process being carried out in one extruding run, for instance by introducing PEI and constituent (2) into the extruder throat and then adding the remainder of the constituents to be incorporated into the mixture further on down in the same extruder.

The invention will be further described with reference to to following examples. Of course, these are given for the purpose of illustration and do not limit the invention. Unless otherwise specified, the parts and percentages in the examples are by weight.

The constituents employed in the examples below had the following properties:

(a) poly(etherimide) (PEI), Ultem® 1000 (ex General Electric) corresponds to the general formula:

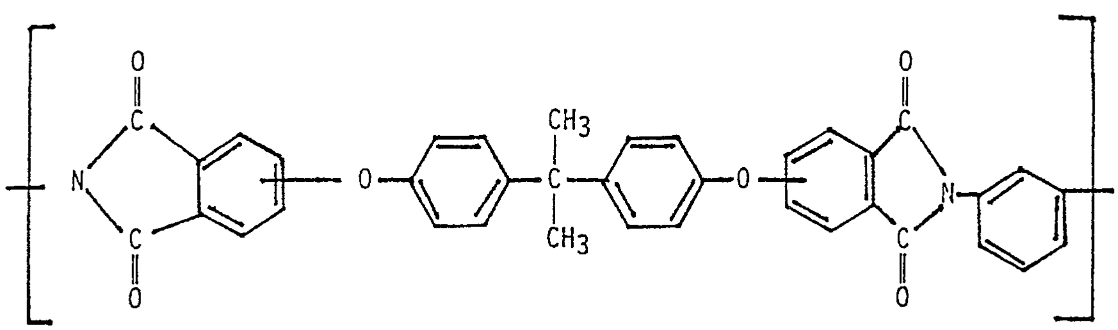

The melt-flow index (MFI) in accordance with ISO 1133 was 10,2 g/10 min (measured at 372° C at a load of 2,16 kg).

(b) polyamide-6,6 (ex Akzo Plastics) with $\eta$rel = 2,50(1 g per 100 ml of 90% formic acid) at 25° C and melting point Tmp = 256° C (in accordance with ASTM D-2117).

(c) polyamide-6 (ex Akzo Plastics) with $\eta$rel = 2,30 (1 g per 100 ml of 90% formic acid) at 25° C and

Tmp = 218°C (in accordance with ASTM D-2117).

(d) EPDM, Keltan® 740 (ex DSM) is a terpolymer of ethylene, propylene, and a small amount (about 1%) of dicyclopentadiene.

The Mooney viscosity ML (1+4) at 125°C was 64.

(e) Keltaflex® N 35 (ex DSM) is a thermoplastic elastomer based on EPDM onto which 0,6 wt.% of maleic anhydride has been grafted. This material had a specific gravity of 890 $kg/m^3$ (ISO 2781).

(f) EP rubber, Vistalon V808 (ex Exxon Chemicals) is a copolymer of ethylene and propylene with an ethylene content of 75 wt.% and a Mooney viscosity ML (1+4) at 125°C of 46.

(g) Poly bd resin® R-45HT (ex Arco Chemical Co.) is a liquid hydroxyl terminated polybutadiene. The number average molecular weight was 2800, the specific gravity at 30°C 0,901, and the hydroxyl number 46,6 mg KOH/g.

(h) As constituent (2) was used Nourymix® MA 903 (ex Akzo Chemie) composed of a concentrate of 50 wt.% maleic anhydride (MAA) on a carrier of HPDE.

(i) pure powdered MAA, or

(j) MAGME® (ex Cyanamid) (= methyl acrylamidoglycolate methyl ether).

(k) EP rubber Dutral® CO 034 PLF (ex Montedison), a copolymer of ethylene and propylene having a propylene content of about 30% and a Mooney viscosity ML (1+4) at 100°C of about 40.

(l) Epoxide-functionalised EP rubber (ex Akzo Chemie) having a propylene content of about 30% and 84 meq epoxide per kg of rubber.

(m) Allyl cumyl peroxide (ex Akzo Chemie)

The preparation of the plastics compositions according to the invention first comprised the polyetherimide (PEI) being functionalised with constituent (2) in the presence of rubber or not to form a prepolymer. The preparation of these prepolymers is specified in Example I.

Example I

Preparation of prepolymer A

4,8 kg of PEI (a) were mixed with 0,2 kg of the MAA concentrate (h) described hereinabove in a Barmag S 45 (L/D = 27) vented single-screw extruder at a rate of 100 revolutions per minute and the following temperature profile: 275°-325°-350°C.

Preparation of prepolymer B

7,85 kg of PEI (a) were mixed with 0,36 kg of the MAA concentrate (h) and 1,79 kg of Keltan 740 (d) in a manner analogous to that described for the preparation of prepolymer A, except that the temperature profile now was 250°-300°-350°C.

The following prepolymers were prepared using a Werner & Pfleiderer ZSK 30 (L/D = 38) vented twin-screw extruder at 250 rpm and a set temperature profile of 295°-325°-360°-360°-360°-360°-360°C.

Table 1 below gives the composition of the prepolymers thus prepared.

Table 1

| prepolymer | polymer (%) | | rubber (%) | | constituent (2) (%) | |
|---|---|---|---|---|---|---|
| C* | PEI | 98 | - | - | (i) | 2 |
| D* | PEI | 78,4 | (d) | 18 | (h) | 3,6 |
| E | PEI | 78,4 | (d) | 18 | (h) | 3,6 |
| F | PEI | 96 | - | - | (h) | 4 |
| G | F | 82,1 | (d) | 17,9 | - | - |
| H | F | 82,1 | (e) | 17,9 | - | - |
| I | PEI | 67 | (f) | 30 | (h) | 3 |
| J | PEI | 48,8 | (f) | 48,8 | (j) | 2,4 |
| K | PEI | 69,3 | (g) | 30,7 | - | - |

* no venting took place during extrusion.

All prepolymers were dried for between 16 and 24 hours at about 100° C.

Example II

In a vented Werner & Pfleiderer ZSK 30 twin-screw extruder at 250 rpm and a set temperature profile of 250°-270°-290°-290°-290°-310° C the prepolymers of Example I were mixed with PA 6,6 (b) or PA 6 (c) in the mixing ratios specified in the table below, after which the samples were dried in vacuo for 16 hours at 100° C.

The resulting granulate was injection moulded using a Demag D 60 NC III-275A injection moulding machine (snubbing pins, HDT pins) and an Arburg injection moulding machine ($\Phi$ = 25 mm).

The PEI-PA blends (1) (= control), (2), (3), (4), (5), (6), (7), (8), (9), (10), and (11) were injection moulded under the following conditions:
cylinder temperature: 290°-2900-290°-295° C
Mould temperature: 100° C.
The samples (12) (= control), (13), (14), and (15) were injection moulded under the following conditions:
Demag D 60 NC III-275A:
cylinder temperature: 275°-275°-280°-285° C
mould temperature: 95° C.
Arburg $\Phi$ = 25 mm:
cylinder temperature: 290°-290°-290°-295° C
mould temperature: 90° C.

The composition of the PEI-PA blends is given in Table 2, for the properties measured son these blends the results can be found in Table 3.

Table 2

| Blend | | | | | | | | |
|---|---|---|---|---|---|---|---|---|
| PEI-PA | PA6% | PEI% | prepolymer % | | constituent (2) % | | rubber % | |
| (1) (control) | 50 | 50 | - | - | - | - | - | - |
| (2) | 49 | 49 | - | - | (h) | 2 | - | - |
| (3) | 49 | - | C | 51 | - | - | - | - |
| (4) | 44 | - | D | 56 | - | - | - | - |
| (5) | 49 | - | B | 51 | - | - | - | - |
| (6) | 49 | - | A | 51 | - | - | - | - |
| (7) | 44 | - | E | 56 | - | - | - | - |
| (8) | 44 | - | F | 46 | - | - | (d) | 10 |
| (9) | 44 | - | F | 46 | - | - | (e) | 10 |
| (10) | 44 | - | G | 56 | - | - | - | - |
| (11) | 44 | - | H | 56 | - | - | - | - |
| | PA 6,6% | | | | | | | |
| (12 control) | 75 | 25 | - | - | - | - | - | - |
| (13) | 67 | - | I | 33 | - | - | - | - |
| (14) | 67,5 | - | K | 32,5 | - | - | - | - |
| (15) | 59 | - | J | 41 | - | - | - | - |

The data for the properties measured on these PEI-PA blends can be found in Table 3. These properties were determined in accordance with the following standards:

| | Standard |
|---|---|
| Tensile modulus(MPa) | ISO R 527 |
| Yield point (MPa) | ISO R 527 |
| Elongation at yield (%) | ISO R 527 |
| Breaking load (MPA) | ISO R 527 |
| Elongation at rupture (%) | ISO R 527 |
| Notched impact Izod 1/8" (kJ/m$^2$) | ISO 180/4A |
| Charpy impact (% without rupture) | ISO 179/2D |
| HDT-A($^\circ$C) | ISO 75 |

The measuring results in Table 3 clearly show that, although the PEI-PA blends (1) and (12) according to the art have a comparatively high HDT-A, their other properties resulting from tensile and impact tests are generally unsatisfactory.

The addition of constituent (2) is attended with a substantial reduction in brittleness, as is demonstrated by the yield behaviour of these materials and the fact that they display a clearly greater elongation at rupture. Also, adding constituent (2) gives increased impact resistance without the HDT-A being reduced to any great extent as a result.

Table 3

| PA-PEI blend | Tensile modulus MPa | Yield point MPa | Elongation at yield % | Tensile strength MPa | Elongation at rupture % | Izod 1/8" $kJ/m^2$ | Charpy % without rupture | HDT-A °C |
|---|---|---|---|---|---|---|---|---|
| (1) | 2810 | | | 81,6 | 4,1 | 1,85 | 50 | 104 |
| (2) | - | 85,4 | 4,8 | 82,8 | 11,4 | 2,2 | 80 | - |
| (3) | - | 87,4 | 4,0 | 69,1 | 24,4 | 1,8 | 80 | - |
| (4) | 2160 | 61,1 | 4,9 | 56,4 | 28,9 | 41,2 P | 100 | 75 |
| (5) | 2120 | 59,1 | 4,8 | 53,6 | 40,8 | 52,0 P | 100 | 70 |
| (6) | - | 84,0 | 4,0 | 73,4 | 12,0 | 2,0 | 80 | 106 |
| (7) | - | 61,4 | 4,4 | 55,4 | 21,6 | 42,2 P | 100 | 72 |
| (8) | - | 66,4 | 9,0 | 61,7 | 25,2 | 6,6 | - | - |
| (9) | - | 63,8 | 6,7 | 57,9 | 38,8 | 17,4 | - | - |
| (10) | - | 64,8 | 7,9 | 57,4 | 32,4 | 11,5 | - | - |
| (11) | - | 64,0 | 4,1 | 56,6 | 45,4 | 24,1 | - | - |
| (12) | 3030 | | | 86,5 | 3,2 | 3,2 | - | 90 |
| (13) | 2320 | 65,5 | 6,1 | 63,5 | 13,4 | 9,9 | - | 78 |
| (14) | 2460 | | | 68,9 | 8,2 | 3,0 | - | 79 |
| (15) | 1890 | 51,7 | 8,5 | 51,4 | 12,2 | 6,4 | - | 70 |

Example III

Epoxidation of the poly(etherimide):

40 g of allyl cumyl peroxide (m) were dissolved in 400 ml of n-hexane. In a rotating sevaporator this solution was dusted onto 4,0 kg of PEI (a). Next, the system was put under vacuum, heated to 170° C, and kept at this temperature for 1 hour.

The following mixtures were prepared in a vented Werner & Pfleiderer twin-screw extruder of the ZSK 30 type (L/D = 38) at a rotational speed of 250 rpm and a set temperature profile of 295°-325°-360°-360°-360°-360°-360° C:

I) 80 wt.% of the epoxidized PEI and 20 wt.% of the epoxidized EP rubber (l).

II) 80 wt.% of the epoxidized PEI and 20 wt.% of Keltan® 740 (d).

The mixtures were dried in vacuo for 6 hours at 140° C.

Preparation of the blends:

The following blends were extruded in a vented Werner & Pfleiderer ZSK 30 twin-screw extruder at 250 rpm and a set temperature profile of 250°-270°-290°-290°-290°-310°-310° C:

1) 60 wt.% of PA6 (c) and 40 wt.% of PEI (a) (control)

2) 54 wt.% of PA6 (c) and 46 wt.% of the mixture described in I

3) 54 wt.% of PA6 (c) and 46 wt.% of the mixture described in II.

The blends were dried in vacuo for 16 hours at 100° C.

The resulting granulate was injection moulded using an Arburg injection moulding machine (Φ = 30 mm) (Izod pins) and a Demag D 60 NC III-275A injection moulding machine (snubbing pins, HDT pins).

Injection moulding conditions:

Blend 1): Cylinder temperature 290°-290°,-290°-295° C
Mould temperature 100° C
Blends 2) and 3): Cylinder temperature 275°-275°-275°-280° C

Mould temperature 100 °C

| Properties of the blends | Blend 1 (control) | Blend 2 | Blend 3 |
|---|---|---|---|
| Tensile modulus (MPa) | 2980 (40) | 2400 (40) | 2420 (10) |
| Yield point (MPa) | 85,8 ( 0,4) | 62,9 ( 0,7) | 65,6 ( 0,8) |
| Elongation at yield (%) | 3,4 ( 0,1) | 5,0 ( 0,2) | 5,0 ( 0,2) |
| Breaking load (MPa) | 69,7 ( 5,3) | 60,1 ( 0,7) | 58,2 ( 1,9) |
| Elong. at rupture (%) | 20,9 ( 4,3) | 37,7 ( 4,2) | 36,2 ( 8,7) |
| Notched impact Izod 1/8" (kJ/$m^2$) | 4,3 ( 0,4) | 10,3 ( 0,7) | 9,9 ( 0,9) |
| HDT-A (°C) | 80,9 ( 1,2) | 67,1 ( 0,4) | 72,0 ( 1,1) |
| Standard deviations are given in parentheses. | | | |

The measuring results show that the blends 2 and 3 display reduced brittleness as compared with blend 1 (the mixture according to the art). This is manifested by the improved impact resistance and increased elongation at rupture of these materials.

**Claims**

1. A plastics composition based on
   (1) 5-95 wt.% of a polyetherimide (PEI) and 95-5 wt.% of a polyamide (PA),
   (2) 0,01-40 parts by weight of (A) a compound having an ethylenically unsaturated group and/or a propylene group and a carboxylic acid, acid anhydride, acid amide, imido, carboxylic ester, amino or hydroxyl group, or of (B) an epoxy compound per 100 parts by weight of PEI and PA, and
   (3) 0-40 parts by weight of a rubber polymer per 100 parts by weight of PEI and PA.
2. A plastics composition according to claim 1, characterized in that the PEI:PA weight ratio is 20-60 wt.% of the former to 80-40 wt.% of the latter.
3. A plastics composition according to claim 1, characterized in that compound (2) is maleic anhydride, maleic acid, fumaric acid, maleimide, maleic hydrazide, nadic methyl anhydride, dichloromaleic anhydride, maleic acid diamide, a natural fat or oil, an unsaturated carboxylic ester, an acid amide or anhydride of an unsaturated carboxylic acid, an unsaturated alcohol, an unsaturated amine, a reaction product of a diamine and maleic anhydride, maleic acid, fumaric acid, maleimide or maleic hydrazide, an adduct of a diene polymer or an ethylene-propylene copolymer to maleic anhydride or a diene polymer or ethylene-propylene copolymer substituted with an amino, carboxyl, acid anhydride or hydroxyl group.
4. A plastics composition according to claim 3, characterized in that compound (2) corresponds to any one of the following formulae:

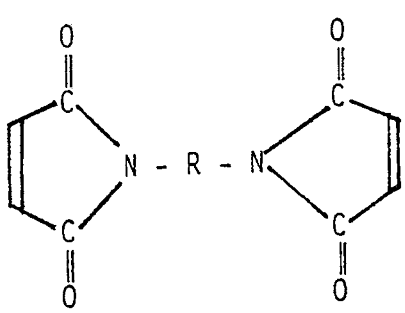

or

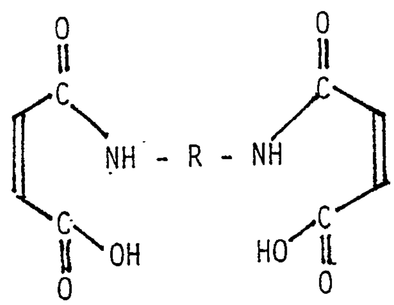

wherein R has the meaning of an alkylene or arylene group having at most 20 carbon atoms, or a

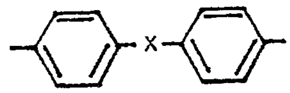

group, wherein x stands for -O-, $-SO_2-$,$-CH_2-$or

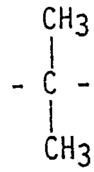

5. A plastics composition according to claim 1, characterized in that into it are incorporated 0,1-20 parts by weight of compound (2), calculated on 100 parts by weight of polyetherimide and polyamide.

6. A plastics composition according to claim 5, characterized in that into it are incorporated 0,3-15 parts by weight of compound (2).

7. A plastics composition according to claim 1, characterized in that the rubberlike polymer (3) is an EPDM, EPR, S(E)BS or polybutadiene rubber.

European Patent Office

# EUROPEAN SEARCH REPORT

Application Number

EP 90 20 1953

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 657 987 (J.A. ROCH et al.)<br>--- | | C 08 L 77/00<br>C 08 L 79/08<br>C 08 K 5/20<br>C 08 K 5/34 |
| D,A | WO-A-8 403 894 (GENERAL ELECTRIC)<br>----- | | |
| | | | TECHNICAL FIELDS SEARCHED (Int. Cl.5) |
| | | | C 08 L |

The present search report has been drawn up for all claims

| Place of search | Date of completion of the search | Examiner |
|---|---|---|
| THE HAGUE | 08-10-1990 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)